# EUROPEAN PATENT APPLICATION

(11) **EP 4 385 956 A1**
(43) Date of publication of application: **19.06.2024**
(21) Application number: 23214998.9
(22) Date of filing: 07.12.2023
(51) Int. Cl.: C03B 37/014

(54) **POROUS GLASS BASE MATERIAL MANUFACTURING SYSTEM AND METHOD FOR MANUFACTURING GLASS BASE MATERIAL**

(30) Priority: 15.12.2022 JP 2022200355
(71) Applicant: SHIN-ETSU CHEMICAL CO., LTD., Tokyo 1000005 (JP)
(72) Inventor: NODA, Naoto, Ibaraki, 314-0102 (JP); IINUMA, Hitoshi, Ibaraki, 314-0102 (JP)
(74) Representative: Vossius & Partner Patentanwälte Rechtsanwälte mbB

(57) **Abstract**

A porous glass base material manufacturing system that does not require the manufacturing apparatus and building to be hazardous material-compatible and that can provide a stable supply of raw materials, even when organic siloxane raw material is used as raw materials to produce silica fine particles is provided. The porous glass base material manufacturing system comprises a raw material supplying apparatus and a porous glass base material manufacturing apparatus. The raw material supplying apparatus comprises: a raw material tank in which organic siloxane raw material in a liquid state is stored and the remaining space is filled with inert gas; a liquid feed pump to pump the organic siloxane raw material from the raw material tank; a circulating piping and a branch piping through which the raw material pumped is passed; a liquid mass flow controller that controls the flow rate of organic siloxane raw material passed through the branch piping to a predetermined flow rate; and a vaporizer provided downstream of the mass flow controller to vaporize the organic siloxane raw material. The porous glass base material manufacturing apparatus is installed indoors in a building and equipped with a burner that combusts organic siloxane raw materials to produce silica fine particles. The raw material supplying apparatus is installed outdoors or indoors in a separate building.

## Description

### Technical Field

The present invention relates to a porous glass base material manufacturing system which is equipped with a raw material supply apparatus and a porous glass base material manufacturing apparatus, and a method for method for manufacturing a glass base material.

### Background Art

Conventionally, a method for manufacturing porous glass base material is known in which silica fine particles (SiO₂ fine particles) are deposited on a starting base material, such as glass rods, to form soot. By dehydrating and sintering this type of porous glass base material, a glass base material for manufacturing optical fibers and the like can be obtained.

The porous glass base material is manufactured, for example, by externally depositing SiO₂ fine particles by the OVD method or the like on a core base material manufactured by the VAD method or the like. As a silicon compound raw material for producing SiO₂ fine particles, silicon tetrachloride (SiCl₄) is widely used.

By feeding SiCl₄ to a burner and flame hydrolyzing it, the SiO₂ fine particles are produced based on the following formula.

SiCl₄ + 2H₂O → SiO₂ + 4HCl

In this flame hydrolysis, hydrochloric acid is formed as a byproduct. Since hydrochloric acid is corrosive to metals when mixed with moisture, care must be taken to materials of the manufacturing apparatus and exhaust temperature management. A possible solution would be to install equipment to recover hydrochloric acid from the exhaust, but this would increase costs.

As the silicon compound raw material for producing SiO₂ fine particles, a halogen-free organic silicon compound that does not contain Cl (chlor) in its molecule may be used. Octamethylcyclotetrasiloxane (OMCTS), which is a high-purity organic siloxane that is available on an industrial scale, is an example of such materials.

When OMCTS is used, SiO₂ fine particles are produced by the reaction shown in the following formula.

[SiO(CH₃)₂]₄ + 16O₂ → 4SiO₂ + 8CO₂ + 12H₂O

When halogen-free organic siloxane, such as OMCTS, is used as the silicon compound raw material, hydrochloric acid is not exhausted, which allows for greater flexibility in the material of the manufacturing apparatus and handling of exhaust gas. In addition, there is no need to install equipment to recover hydrochloric acid and treat the recovered hydrochloric acid, which is expected to reduce costs.

In addition, OMCTS has a very large heat of combustion, so the amount of hydrogen and other combustible gases required for combustion can be expected to be reduced compared to the use of SiCl₄.

### Summary of the Invention

### Problems to be solved by the Invention

OMCTS, the organic siloxane raw material, is a flammable liquid with a flash point of 54°C and is classified as a Class 4 Hazardous Substance, Petroleum No. 2 under the Fire Service Law. Therefore, facilities where the amount stored or handled exceeds the designated quantity must be designed to handle hazardous materials as stipulated in the Fire Service Law.

In a porous glass base material manufacturing apparatus in Japanese Patent No. 6793676, a vaporizer for vaporizing liquid raw materials is installed in the apparatus along with a burner for depositing silica fine particles. In other words, the raw material is fed into the manufacturing apparatus in a liquid state. Therefore, the manufacturing apparatus and the building in which the manufacturing apparatus is installed need to be made hazardous material compliant. In addition, during the deposition of silica fine particles, severe temperature fluctuations occur in the manufacturing apparatus, which may cause instability in the feeding and vaporization of the raw material liquid. Furthermore, the installation of the vaporizer inside the apparatus increases the size of the apparatus, which in turn increases the space occupied in the building.

The object of the present invention is to provide a porous glass base material manufacturing system and a glass base material manufacturing method that do not require the manufacturing apparatus and building to be hazardous material-compatible and that can provide a stable supply of raw materials, even when organic siloxane raw materials are used as raw materials to produce silica fine particles.

### Means for solving the Problems

A porous glass base material manufacturing system according to the present invention comprises: a raw material supply apparatus comprising: a raw material tank in which organic siloxane raw material in a liquid state is stored and the remaining space is filled with inert gas; a liquid feed pump to pump the organic siloxane raw material from the raw material tank; a circulating piping and a branch piping through which the organic siloxane raw material pumped by the liquid feed pump is passed; a liquid mass flow controller that controls the flow rate of organic siloxane raw material passed through the branch piping to a predetermined flow rate; and a vaporizer provided downstream of the mass flow controller to vaporize the organic siloxane raw material; and a porous glass base material manufacturing apparatus installed indoors in a building and equipped with a burner that combusts organic siloxane raw materials to produce silica fine particles. The raw material supplying apparatus is installed outdoors or indoors in a separate building.

A raw material liquid supply section, equipped with the raw material tank and the liquid feed pump, and a raw material vaporization section, equipped with the liquid mass flow controller and the vaporizer, may be installed in separate buildings.

One or more sets of raw material vaporization sections may be installed for one porous glass base material manufacturing apparatus, and each set may be installed in a separate building.

The organic siloxane raw material may be octamethylcyclotetrasiloxane (OMCTS).

A porous glass base material manufacturing method according to the present invention performs a step of manufacturing a porous glass base material using the porous glass base material manufacturing system of the present invention, and a step of manufacturing a glass base material by transparent vitrification of the porous glass base material.

### Effects of Invention

According to the porous glass base material manufacturing system and the glass base material manufacturing method of the present invention, even if organic siloxane raw material is used as a raw material to produce silica fine particles, there is no need to make the manufacturing apparatuses and buildings hazardous material-compliant, and a stable supply of the raw material is possible.

### Brief Description of the Drawings

FIG. 1 illustrates an example of the configuration of the porous glass base material manufacturing system.
FIG. 2 illustrates another example of the configuration of the porous glass base material manufacturing system.
FIG. 3 illustrates yet another example of the configuration of the porous glass base material manufacturing system.

### Description of Embodiments

In the following, an embodiment of the present invention is described with reference to the drawings. In the following descriptions and drawings, the same portion will be marked with the same reference numerals and the description of the portion once described will be omitted, or described only to the extent necessary.

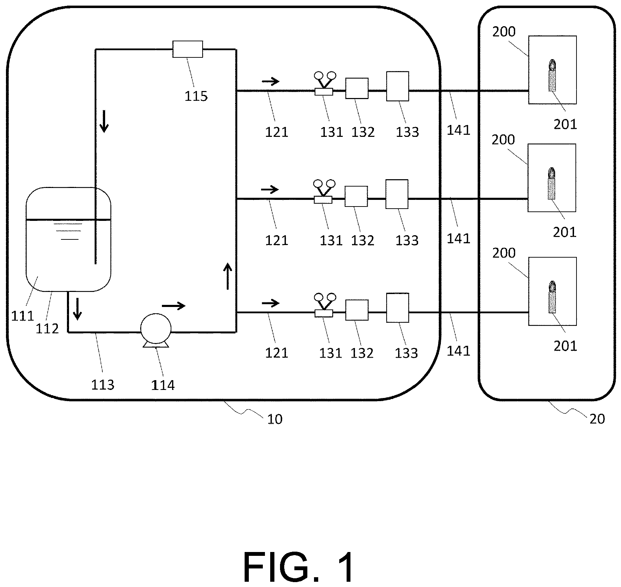

FIG. 1 illustrates an example of the configuration of the porous glass base material manufacturing system. The porous glass base material manufacturing system is equipped with a raw material supplying apparatus and a porous glass base material manufacturing apparatus 200. FIG. 1 shows the example with three units of porous glass base material manufacturing apparatus 200, but the number of units installed is arbitrary and can be one or more.

The raw material supplying apparatus includes a raw material tank 112, a circulating piping 113, a liquid feed pump 114, a pressure loss unit 115, a pressure reducing valve 131, a liquid mass flow controller 132, and a vaporizer 133. Of these, the raw material tank 112, the circulating piping 113, the liquid feed pump 114, and the pressure loss unit 115 constitute the raw material liquid supply section, while the pressure reducing valve 131, the liquid mass flow controller 132, and the vaporizer 133 constitute the raw material vaporization section. The raw material supplying apparatus is equipped with a branch piping 121 for pumping the raw material liquid 111 from the raw material liquid supply section to the raw material vaporization section.

The raw material tank 112 stores the raw material liquid 111 and the remaining space is filled with inert gas. The raw material liquid 111 is an organic siloxane raw material in a liquid state. The organic siloxane raw material is, for example, octamethylcyclotetrasiloxane (OMCTS).

To prevent the excessive dissolution of inert gas in the raw material liquid 111 stored in the raw material tank 112, it is preferable that the internal pressure of the raw material tank 112 is kept below 0.1 MPa, and it is even more preferable to keep it below 0.05 MPa.

The circulating piping 113 is a pipeline that starts from the raw material tank 112, circulates around the outside of the raw material tank 112, and returns to the raw material tank 112 again, with a liquid feed pump 114 and a pressure loss unit 115 provided along the pipeline. branch pipings 121 branching from the circulating piping 113 are provided between the liquid feed pump 114 and the pressure loss unit 115. The branch pipings 121 are provided in the same number as the number of pairs of raw material vaporization section. Fig. 1 shows an example of three sets of raw material vaporization section, in which three branch pipings 121 are also provided.

The liquid feed pump 114 discharges the raw material liquid 111 supplied from the raw material tank 112 and pumps it into the circulating piping 113. The circulating piping 113 circulates the raw material liquid 111 and pumps the raw material liquid 111 to the branch pipings 121.

It is preferable that the discharge pressure of the raw material liquid 111 from the liquid feed pump 114 is above the internal pressure of the raw material tank 112 to prevent the generation of bubbles caused by inert gas dissolved in the raw material liquid 111. Specifically, it is preferable to discharge the raw material liquid 111 at a pressure of 0.2 to 0.7 MPa, and even more preferable to discharge at a pressure of 0.4 to 0.6 MPa.

The capacity of the raw material tank 112, circulating piping 113, and liquid feed pump 114 is determined by the total amount of raw material liquid 111 used.

The pressure loss unit 115 is an orifice or the like, and is provided downstream of the discharge of the liquid feed pump 114 and downstream of the branching point of the branch piping 121 to maintain the discharge pressure of the raw material liquid 111 at a predetermined pressure.

The raw material liquid 111 pumped from the circulating piping 113 to the branch piping 121 is supplied to the raw material vaporization section. In the raw material vaporization section, from the upstream side, a pressure reducing valve 131, a liquid mass flow controller 132, and a vaporizer 133 are provided in this order.

The raw material liquid 111 supplied to the raw material vaporization section is depressurized to, for example, 0.2-0.5 MPa at the pressure reducing valve 131 and then vaporized in the vaporizer 133 after the flow rate is controlled at a predetermined flow rate by the liquid mass flow controller 132.

In the vaporizer 133, the raw material liquid 111 can be efficiently vaporized by mixing it with a carrier gas. As the carrier gas, an inert gas such as nitrogen, argon and helium, oxygen, or a mixed gas of oxygen and an inert gas may be used. The carrier gas may be preheated according to its supply flow rate to efficiently vaporize the raw material liquid 111 in the vaporizer 133. From the viewpoint of efficiently vaporizing the raw material liquid 111 and preventing polymerization of the raw material 111, it is preferable to set the temperature of the vaporizer 133 to a temperature of 150-250 °C when OMCTS is used as the organic siloxane raw material.

The raw material gas obtained by vaporizing the raw material liquid 111 is delivered to the raw material gas piping 141 and supplied to the burner 201 of the porous glass base material manufacturing apparatus 200.

The porous glass base material manufacturing apparatus 200 produces silica fine particles (SiO₂ particles) by combusting the raw material gas in a burner 201 and depositing them on a starting base material such as a glass rod to produce a porous glass base material.

Although FIG. 1 shows an example of one-to-one installation of a porous glass base material manufacturing apparatus 200 and a raw material vaporization section, it can be configured so that raw material gas is supplied from multiple sets of raw material vaporization section to one porous glass base material manufacturing apparatus 200, depending on the required supply flow rate of raw material gas.

In the present invention, the raw material supplying apparatus and the porous glass base material manufacturing apparatus 200 are installed in separate spaces. For example, as shown in FIG. 1, the raw material supplying apparatus may be installed indoors in building 10, and the porous glass base material manufacturing apparatus 200 may be installed indoors in building 20, which is different from building 10. Either the raw material supplying apparatus or the porous glass base material manufacturing apparatus 200 may be installed indoors in a building, while the other is installed outdoors.

When OMCTS is used as the organic siloxane raw material, the freezing point of OMCTS is 17°C, and the flash point is 54°C. Therefore, to prevent the solidification of OMCTS, it is preferable to maintain the indoor room temperature in the building 10 where the raw material supplying apparatus is installed at about 30°C or to keep each piece of equipment and each piping at about 30°C using electricity, steam, or warm water.

By installing the raw material supplying apparatus and the porous glass base material manufacturing apparatus 200 in separate spaces, the space for handling the raw material liquid is isolated from the space where the porous glass base material manufacturing apparatus 200 equipped with burner 201 is installed. This eliminates the need to make the porous glass base material manufacturing apparatus 200 and the building in which said apparatus is installed hazardous material-compliant. In addition, by providing the vaporizer 133 outside of the porous glass base material manufacturing apparatus 200, the increase in size of the porous glass base material manufacturing apparatus 200 can be avoided.

By installing the raw material vaporization facility in a separate space that is not affected by temperature changes in the porous glass base material manufacturing apparatus 200, the raw material supply can be stabilized. For example, if the temperature in the liquid mass flow controller 132 becomes high relative to the raw material tank 112, the portion of gas dissolved in the raw material liquid 111 that exceeds the saturation dissolution amount may be generated as bubbles in the liquid mass flow controller 132, which may interfere with feeding and vaporization of the raw material liquid. However, according to the configuration shown in FIG. 1, not only is the liquid mass flow controller 132 installed in a different building 10 than the building 20 in which the porous glass base material manufacturing apparatus 200 is installed, but the raw material tank 112 is also installed in the same building 10, eliminating the difference in environmental temperature. Therefore, this problem can be avoided, and the raw material supply can be stabilized.

By performing a step of manufacturing a base material using the porous glass base material manufacturing system configured as described above and a step of dehydrating and sintering the manufactured base material into a transparent glass by heating it at about 1500°C in an atmosphere containing helium gas, for example, the glass base material can be manufactured.

### <Modified example 1>

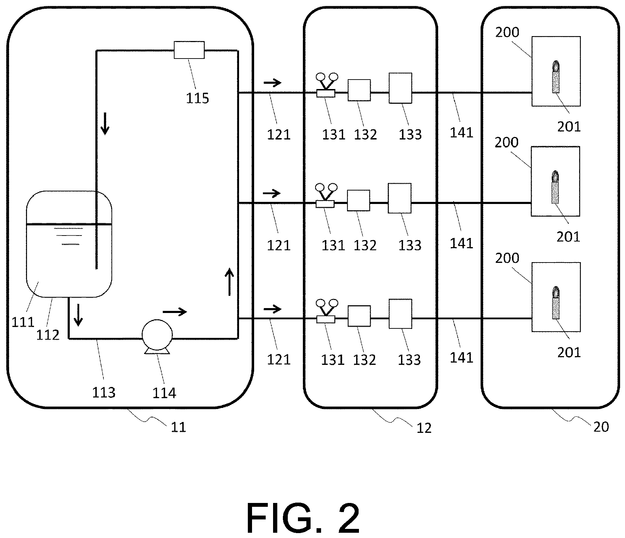

Instead of installing the raw material supplying apparatus together in one building 10, the raw material liquid supply section and raw material vaporization section may be installed in separate buildings 11 and 12, respectively, as shown in FIG. 2.

In the configuration shown in FIG. 2, it is still preferable to maintain the indoor room temperature at about 30°C for both building 11 and building 12 or to keep each piece of equipment and each piping installed at about 30°C. In this way, the solidification of OMCTS can be prevented, and the raw material supply can be stabilized.

Either the raw material liquid supply section or the raw material vaporization section may be installed outdoors.

### <Modified example 2>

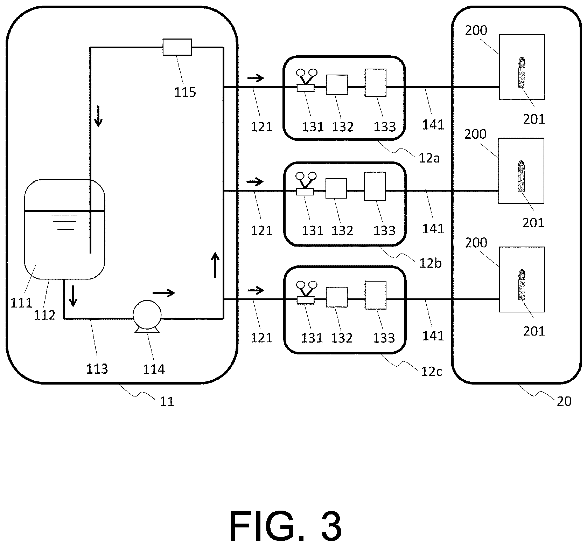

When there are multiple sets of raw material vaporization section, instead of installing them together in one building 12, each set may be installed in a separate building, as shown in FIG. 3. In the case of FIG. 3, there are three sets of raw material vaporization sections, so they are installed in building 12a, building 12b, and building 12c, respectively.

In the configuration shown in FIG. 3, it is still preferable to maintain the indoor room temperature at about 30°C for each of the buildings 12a, 12b, and 12c, or to keep each piece of equipment and each piping installed at about 30°C. In this way, the solidification of OMCTS can be prevented, and the raw material supply can be stabilized.

The present invention is not limited to the above embodiments. The above embodiments are examples, and any embodiment that has substantially the same configuration as the technical concept described in the claims of the present invention and achieves similar effects is included in the technical scope of the present invention. In other words, changes can be made as appropriate within the scope of the technical concept expressed in the present invention, and forms with such changes and improvements are included in the technical scope of the present invention.

## Claims

1. A system for manufacturing a base material for porous glass comprising:
a raw material supply apparatus comprising:
a raw material tank in which organic siloxane raw material in a liquid state is stored, and the remaining space is filled with inert gas;
a liquid feed pump to pump the organic siloxane raw material from the raw material tank;
a circulating piping and a branch piping through which the organic siloxane raw material pumped by the liquid feed pump is passed;
a liquid mass flow controller that controls the flow rate of organic siloxane raw material passed through the branch piping to a predetermined flow rate; and
a vaporizer provided downstream of the mass flow controller to vaporize the
organic siloxane raw material; and
an apparatus for manufacturing a base material for porous glass, wherein the apparatus is installed indoors in a building and equipped with a burner that combusts organic siloxane raw materials to produce silica fine particles,
wherein the raw material supplying apparatus is installed outdoors or indoors in a separate building.

2. The system for manufacturing a base material for porous glass according to claim 1, wherein a raw material liquid supply section, equipped with the raw material tank and the liquid feed pump, and a raw material vaporization section, equipped with the liquid mass flow controller and the vaporizer, are installed in separate buildings.

3. The system for manufacturing a base material for porous glass according to claim 2, wherein one or more sets of raw material vaporization sections are installed for one porous glass base material manufacturing apparatus, and each set is installed in a separate building.

4. The system for manufacturing a base material for porous glass according to any one of claims 1 to 3, wherein the organic siloxane raw material is octamethylcyclotetrasiloxane (OMCTS).

5. A method for manufacturing a base material for porous glass, comprising:
a step of manufacturing a porous glass base material using the system for manufacturing a base material for porous glass as claimed in claim 1; and
a step of manufacturing a glass base material by transparent vitrification of the porous glass base material.
